# EUROPEAN PATENT APPLICATION

(11) **EP 4 668 829 A1**
(43) Date of publication of application: **24.12.2025**
(21) Application number: 24757293.6
(22) Date of filing: 15.02.2024
(51) Int. Cl.: H04W 24/02, H04W 24/10, H04W 8/24, H04B 7/06, H04W 72/231, H04W 64/00, G06N 20/00

(54) **METHOD AND APPARATUS FOR MANAGING MODEL IN WIRELESS COMMUNICATION SYSTEM**

(30) Priority: 15.02.2023 KR 20230020269
(71) Applicant: LG Electronics Inc., Yeongdeungpo-gu Seoul 07336 (KR)
(72) Inventor: KANG, Jiwon, Seoul 06772 (KR); KIM, Seonwook, Seoul 06772 (KR); PARK, Haewook, Seoul 06772 (KR)
(74) Representative: Mooser, Sebastian Thomas
(86) International application number: PCT/KR2024/095247
(87) International publication number: WO 2024/172574

(57) **Abstract**

A method, performed by a first device in a wireless communication system according to one embodiment of the present disclosure, comprise the steps of: receiving first information related to groups; and receiving second information related to management of the groups.

## Description

### [TECHNICAL FIELD]

The present disclosure relates to a method and an apparatus for managing a model in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

A communication functionality can be implemented based on a model(s)/functionality(s). In this regard, operations for Life Cycle Management (LCM) can be performed. As an example, a plurality of models/functionalities can be implemented based on parameters (and structures) optimized/obtained for each operating environment/scenario. As an example, a plurality of functionalities can be supported in one apparatus.

### [Disclosure]

### [TECHNICAL PROBLEM]

When the plurality of models/functionalities are implemented/utilized for the communication functionality as described above, LCM related signaling (e.g., activation/deactivation/update/switching/fallback for model/functionality, etc.) should be performed due to various elements related to management of the corresponding model/functionality (e.g., an environment related to the communication functionality, a scenario related to a specific communication functionality, etc.).

In this case, overhead for the LCM related signaling may be excessively increased. For example, the LCM related signaling may be frequently performed whenever the model/functionality based LCM related elements/property described above is changed. In addition, the signaling overhead may be further increased when such LCM related signaling is performed for each of the plurality of models/functionalities.

An object of the present disclosure is to propose a method for solving the problem described above.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method performed by a first device in a wireless communication system according to an embodiment of the present disclosure includes receiving first information related to groups; and receiving second information related to management of a group.

The group may be related to i) one or more models and/or ii) one or more functionalities.

An operation related to the one or more models and/or the one or more functionalities may be indicated based on the second information.

The operation may include at least one of i) activation, ii) deactivation, iii) selection, iv) switching, v) update, and/or vi) fallback.

The operation may be indicated based on an ID or a unit related to the group.

At least one configuration related to the group may be reset based on the second information.

The at least one configuration may include at least one of i) a reference signal (RS) set related to a measurement, ii) a prediction window related to channel state information (CSI) and/or a beam, and/or iii) a granularity related to reporting of the CSI and/or the beam.

Each of the groups may be related to a common property.

The common property may be based on at least one of i) a zone, ii) a configuration, iii) data traffic, iv) mobility, and/or v) interference.

A first device operating in a wireless communication according to another embodiment of the present disclosure comprises one or more transceivers, one or more processors, and one or more memories connected to the one or more processors and storing instructions.

The instructions configure the one or more processors to perform all steps of any one of the methods based on being executed by the one or more processors.

A device according to another embodiment of the present disclosure comprises one or more memories and one or more processors operably connected to the one or more memories.

The one or more memories store instructions that configure the one or more processors to perform all steps of any one of the methods based on being executed by the one or more processors.

One or more non-transitory computer readable mediums according to another embodiment of the present disclosure stores instructions. The instructions executable by one or more processors configure the one or more processors to perform all steps of any one of the methods.

A method performed by a second device in a wireless communication system according to another embodiment of the present disclosure includes transmitting first information related to groups; and transmitting second information related to management of a group.

A second device operating in a wireless communication according to another embodiment of the present disclosure comprises one or more transceivers, one or more processors, and one or more memories connected to the one or more processors and storing instructions.

The instructions configure the one or more processors to perform all steps of the method based on being executed by the one or more processors.

### [ADVANTAGEOUS EFFECTS]

According to an embodiment of the present disclosure, management of models/functionalities (i.e., LCM) is performed based on a predefined group. Thus, overhead can be reduced compared to a case of performing the LCM related signaling for each model/functionality. A plurality of models/functionalities can be effectively managed while minimizing signaling overhead.

Further, the signaling/operation for managing the plurality of models/functionalities can be more simplified, so a complexity required for implementing an apparatus that supports the management of the plurality of models/functionalities can be reduced.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 illustrates a functional framework of an AI/ML model.
FIG. 2 illustrates a signaling procedure according to an embodiment of the present disclosure.
FIG. 3 is a flow chart illustrating a method performed by a user equipment according to an embodiment of the present disclosure.
FIG. 4 is a flow chart illustrating a method performed by a base station according to another embodiment of the present disclosure.
FIG. 5 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

### Types of AI/ML based on various criteria

### - Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

### - Centralized Learning

In centralized learning, when training data collected from multiple different nodes is reported to a centralized node, all data resources/storage/learning (e.g., supervised learning, unsupervised learning, reinforcement learning, etc.) are performed in one centralized node.

### - Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

### - Distributed Learning

Distributed learning refers to a concept that machine learning processes are scaled and distributed across a cluster of nodes. Training models are shared across multiple nodes split and operating simultaneously to speed up model training.

### Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.

### - Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

### - Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x' . An input node and an output node of the auto encoder have the same feature.

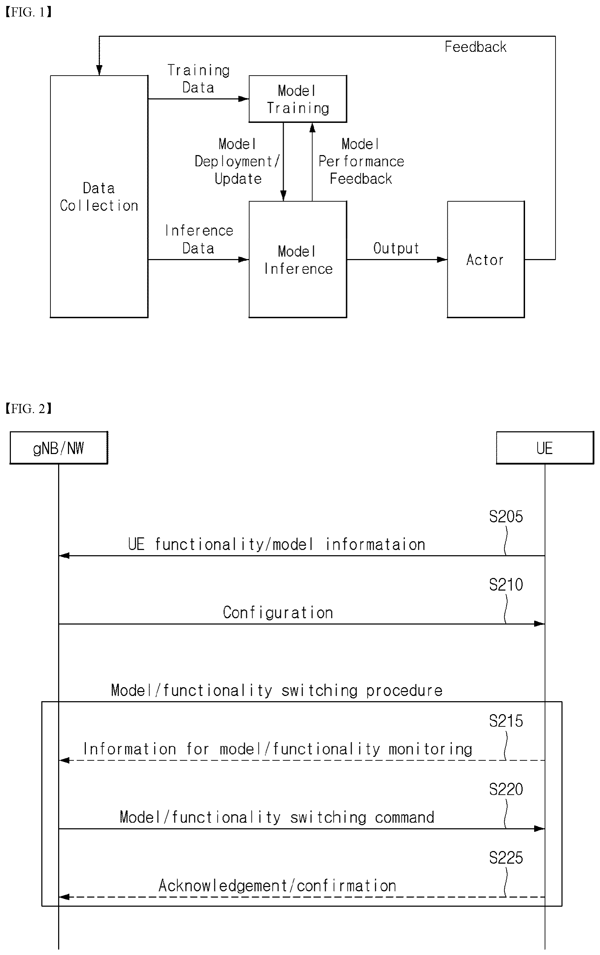

FIG. 1 illustrates a functional framework of an AI/ML model.

In the functional framework illustrated in FIG. 1, the definition of each term and the operation of each function may be based on Table 1 below.

**[Table 1]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |

| |
|---|
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.

### - Training data

Data set for training a model

### - Validation data

Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.

### - Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as following table 2 depending on whether the AI/ML function between a base station and a UE is capable.

**[Table 2]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 2 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

The present disclosure proposes a method for reducing signaling overhead for model/functionality management.

Hereinafter, embodiments described below are not limitedly applied to management of an AI/ML model. As an example, the embodiments described below may be applied for management of a model(s) that implements a communication functionality. As an example, the embodiments described below may be applied for management of the model(s) related to the communication functionality. Hereinafter, the "AI/ML model" may be interpreted/replaced as a "model", a "model related to a (specific) communication function", a " model for a (specific) telecommunication function", a "model related to (specific) a communication procedure", or a "model for (specific) a telecommunication procedure".

In the present disclosure, '/' means 'and' , 'or, ' or 'and/or' according to a context. In the present disclosure, "terminal" and "UE" may be used interchangeably in the same/similar sense, and "base station", "network", and "TRP" may also be used interchangeably in the same/analogous sense from an air-interface point of view.

In recent years, attempts to apply an artificial intelligence/machine learning (AI/ML) technology to wireless communication networks have been active. In a 3GPP Rel-18 AI/ML study item, a study began to apply the AI/ML technology to an air interface between the UE and the network. As main use cases that combine AI/ML into the air interface in the corresponding study, beam management (BM), CSI acquisition, and positioning are considered, and related various terms are defined/discussed as in Table 3 below. In the corresponding study, a method for managing the AI/ML model is being discussed. As an example, the management for the AI/ML model may mean life cycle management (LCM). The LCM may include at least one of model activation/deactivation, model switching/selection, model monitoring, model update/(fine-)tuning, and/or fallback.

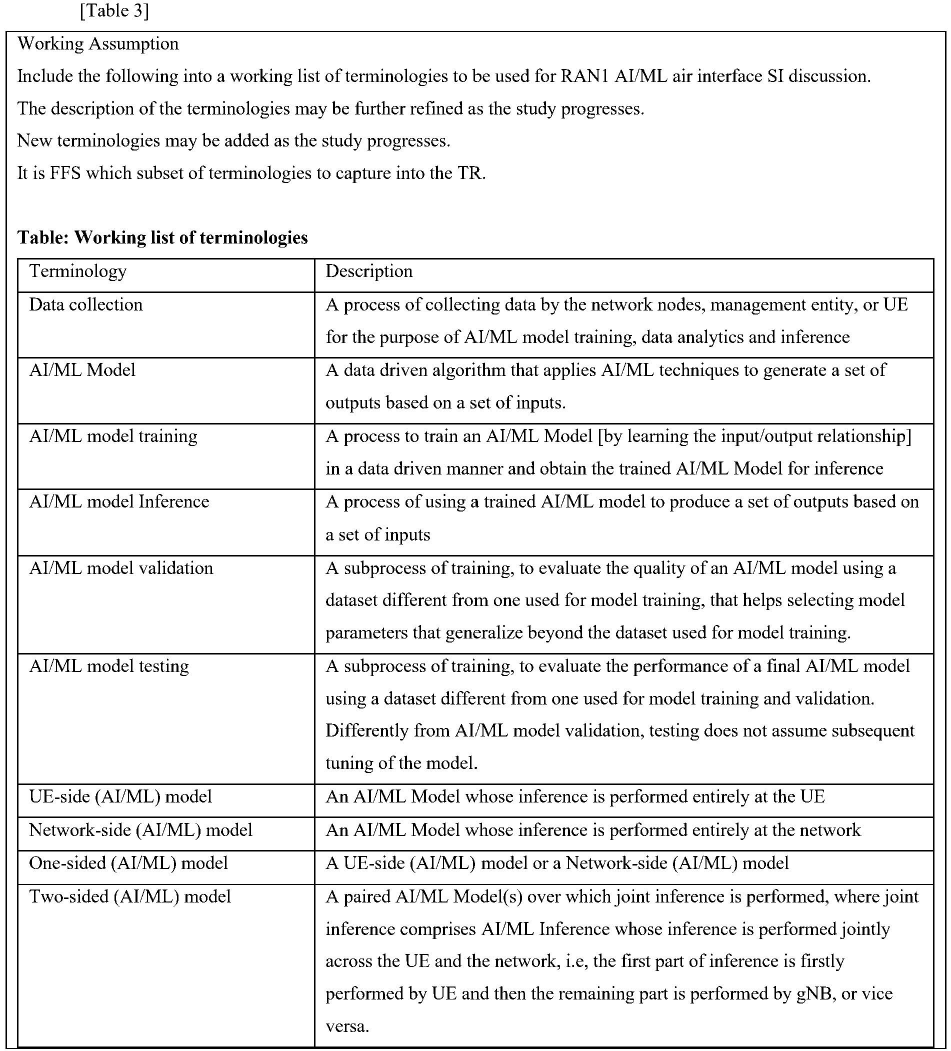

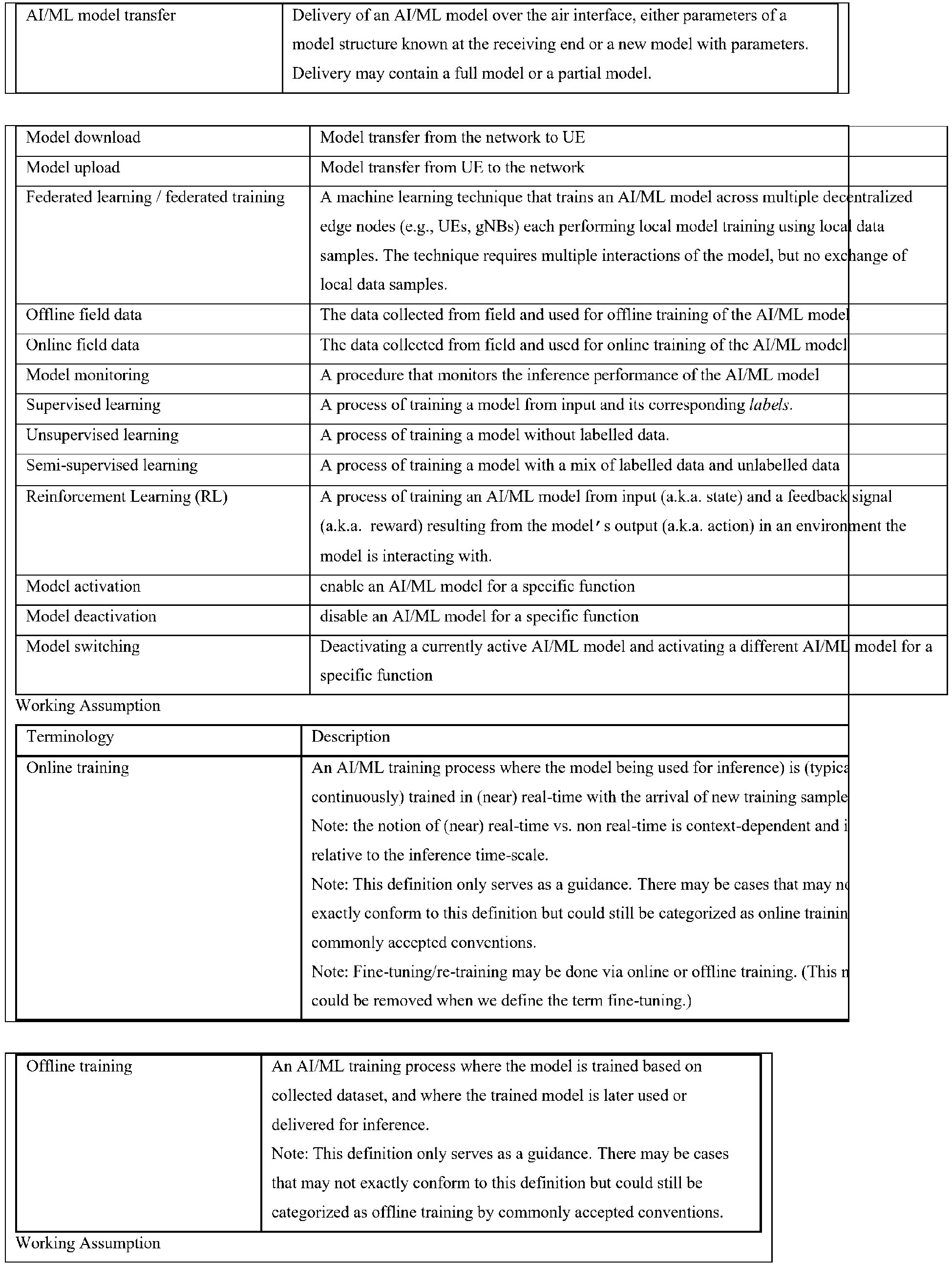

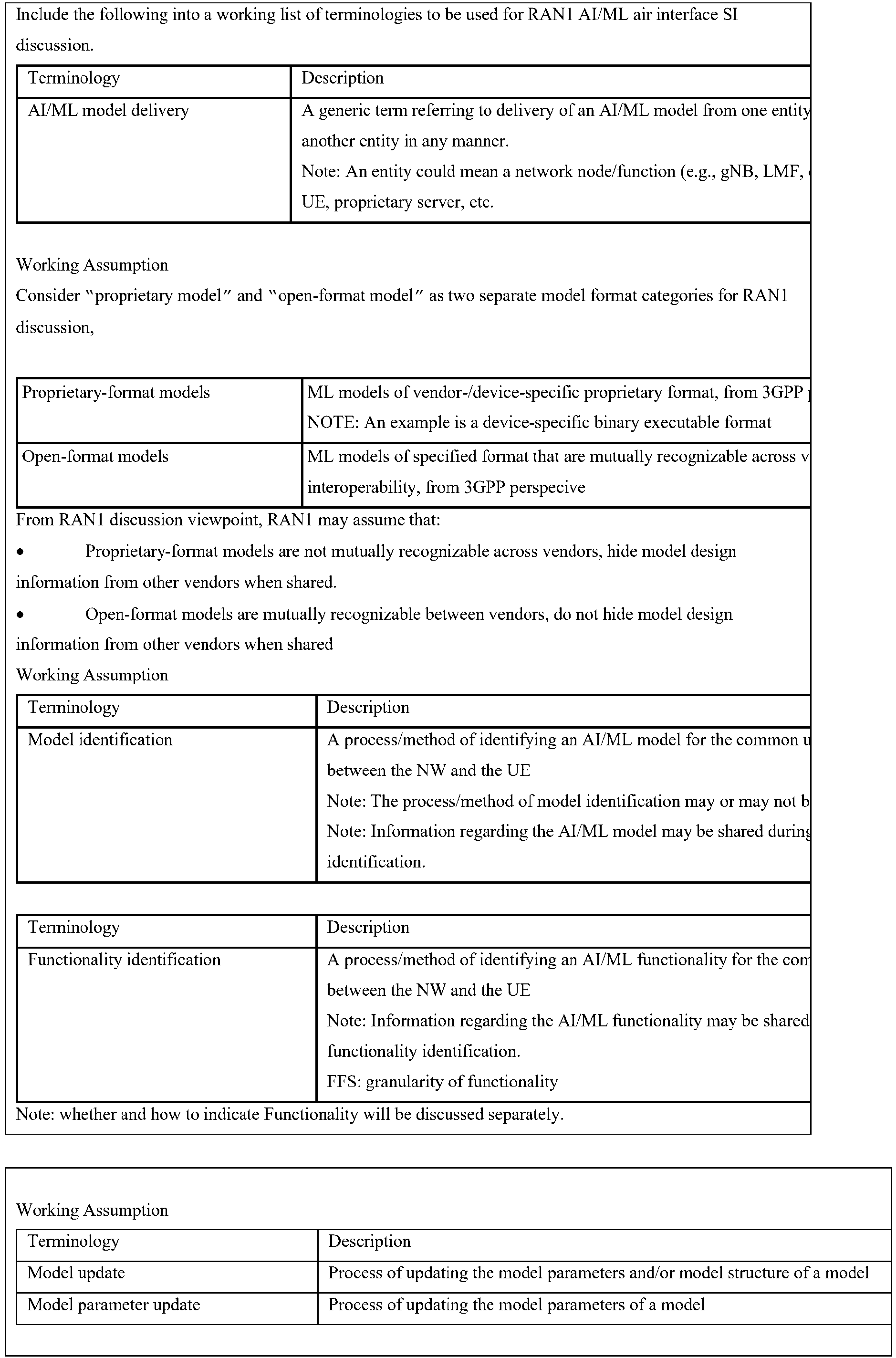

| |
|---|
| Agreement |
| For UE-part/UE-side models, study the following mechanisms for LCM procedures: |
| • For functionality-based LCM procedure: indication of activation/deactivation/switching/fallback based on individual AI/ML functionality |
| ∘ Note: UE may have one AI/ML model for the functionality, or UE may have multiple AI/ML models for the functionality. |
| ∘ FFS: Whether or how to indicate Funtionality |
| For model-ID-based LCM procedure, indication of model selection/activation/deactivation/switching/fallback based on individual model IDs |

For the UE-part/side model, two approaches/methods for model management are discussed as in the last agreement in Table 3. Here, the UE-part model refers to a UE part in a two-sided model, and the UE-side model refers to a one-sided model in which the AI is implemented only in the UE.

A functionality based approach focuses on a functionality or a capability supported by the application of the AI/ML model. A standardization target of the functionality based approach is signaling related to activation/deactivation/switching/fallback and the like for the functionality.

A standardization target of the mode based approach is signaling related to activation/deactivation/switching/fallback and the like for the AI-ML model.

A biggest difference between two approaches methods described above is as follows.

It may be assumed that the UE implements a plurality of AI/ML models according to various environments/scenarios to which the same functionality may be applied, related base station configuration values, and the like.

The model based LCM directly manages which model to activate/deactivate/select/switch. On the other hand, the functionality based LCM performs activation/deactivation/monitoring and the like in terms of a functionality/capability for the corresponding model. Therefore, in the case of the functionality based LCM, information on how many and how models the base station (NW) and/or the UE implements may not be required.

A model/functionality monitoring entity for the UE-part/side model may be the UE or/and the NW. An entity that determines/performs activation/deactivation/selection/switching/update of the model/functionality may be the UE or/and the NW.

An example in which the UE and the NW perform an LCM process together is as follows. When the UE recommends/reports a determination for model selection/update to the NW, the NW may perform final confirmation/decision on the corresponding determination.

As described above, when the NW is involved in the LCM process, signaling between the related UE and NW inevitably occurs.

Table 4 below shows LCM signaling between the UE and the NW.

**[Table 4]**

| |
|---|
| [1] UE → NW |
| 1) Model/functionality performance (monitoring) related information/measurement value |
| 2) Recommendation/preference related to model/functionality selection/activation/deactivation/switching/update/monitoring/fallback/etc. |
| 3) Acknowledgement to NW command/recommendation related to model/functionality selection/activation/deactivation/switching/update/monitoring/fallback/etc. |
| [2] NW → UE |
| 1) Model/functionality performance (monitoring) related information/measurement value |
| 2) Command/recommendation related to model/functionality selection/activation/deactivation/switching/update/monitoring/fallback/etc. |

Such LCM signaling may have to be performed each time the environment/scenario changes, particularly when multiple AI/ML models are implemented by optimizing/obtaining parameters (and structures) in accordance with each operating environment/scenario. Further, it is possible to implement AI/ML models for a plurality of functionalities in one apparatus/UE (e.g., N1 models for CSI prediction, N2 models for CSI compression, N3 models for beam prediction, N4 models for positioning), thereby causing a problem that the LCM signaling overhead is further increased. Hereinafter, methods for solving the above-described problems will be specifically described.

### Method 1

A plurality of models/functionalities may be grouped. Model/functionality LCM signaling may be defined/performed based on a corresponding group (or a unit/ID corresponding to the corresponding group).

The grouping may be performed as follows. The grouping may be performed such that AI/ML models for different functionalities or trained models for the same or similar operating environment/scenario become one group. That is, one or more groups may be determined based on the plurality of models/functionalities.

Here, the operating environment/scenario may be divided /classified in various aspects such as indoor/outdoor, urban/suburban area, zone/site/configuration (ID), base station/TRP deployment/density, UE deployment/density, inter-/intra-cell interference, NW data traffic, UE movement speed, UE form factor, and the like. According to the embodiment, the LCM signaling may be performed as follows.

As an example, in the case of model based LCM, model group (ID) based LCM signaling may be defined/performed.

As an example, in the case of functionality based LCM, individual models may not appear in a standard. That is, the individual models may not be explicitly defined. In this case, the LCM signaling may be defined/performed based on a specific unit (corresponding to a model group). The model group may be a unit defined as any unit or distinguished by any ID (e.g. index or indicator).

For example, a zone/configuration/scenario/environment ID may be defined. The model group based LCM may be performed by defining/performing LCM signaling based on the corresponding ID. The approach may also be applied to the model based LCM. Specifically, the approach may be applied as follows. A plurality of models may belong to the same zone/configuration/scenario/environment ID (e.g., allocating/granting the corresponding ID to model-specific information), and the LCM signaling may be defined/performed based on the corresponding ID. A specific application example is shown in Table 5 below.

**[Table 5]**

| |
|---|
| - Assumption: 3 functionalities and 4 models for each functionality |
| ■ Functionality 1 (e.g. beam prediction) |
| ◆ Model 1-0 for scenario/environment #0 |
| ◆ Model 1-1 for scenario/environment #1 |
| ◆ Model 1-2 for scenario/environment #2 |
| ◆ Model 1-3 for scenario/environment #3 |
| ■ Functionality 2 (e.g. CSI prediction) |
| ◆ Model 2-0 for scenario/environment #0 |
| ◆ Model 2-1 for scenario/environment #1 |
| ◆ Model 2-2 for scenario/environment #2 |
| ◆ Model 2-3 for scenario/environment #3 |
| ■ Functionality 3 (e.g. CSI compression) |
| ◆ Model 3-0 for scenario/environment #0 |
| ◆ Model 3-1 for scenario/environment #1 |
| ◆ Model 3-2 for scenario/environment #2 |
| ◆ Model 3-3 for scenario/environment #3 |
| - Proposed method (example) |
| ■ Grouping models according to operational scenario/environment via NW (if UE reports all models to NW) or via UE |
| ◆ Group#0: model 1-0, 2-0, 3-0 |
| ◆ Group#1: model 1-1, 2-1, 3-1 |
| ◆ Group#2: model 1-2, 2-2, 3-2 |
| ◆ Group#3: model 1-3, 2-3, 3-3 |
| ■ Ex1) LCM signaling is performed on per Group ID basis. |
| ◆ Examples |
| ● NW commands UE to switch to Group#2 (e.g. when switched to scenario/environment #2) |
| ● UE recommends/reports to NW to activate/deactivate Group#1 |
| ● Model monitoring result is signaled/reported per Group ID |
| ■ Ex2) Define/assign an ID per group (e.g. zone/configuration/scenario/environment ID) and LCM signaling is performed based on the ID. |

When the group based LCM is performed by a proposed approach, the signaling/RS overhead may be further reduced by specifying that an RS, a channel, a reporting configuration, and the like related to the corresponding LCM signaling are changed.

In other words, based on LCM signaling, at least one of an RS, a channel, and/or a reporting configuration related to the corresponding LCM signaling may be changed/updated. As an example, the change/update of at least one of the RS, the channel, and/or the reporting configuration related to the LCM signaling may be defined to be performed by an entity(s) performing LCM (without separate signaling). As an example, the entity(s) performing the LCM may operate by assuming that at least one of the RS, the channel, and/or the reporting configuration related to the corresponding LCM signaling is changed/updated when the LCM signaling is performed. As an example, the LCM signaling may be utilized as an indication for change/update for at least one of an RS, channel, and/or reporting configuration in addition to the LCM.

Hereinafter, specific examples of change/update of the RS, the channel, the reporting configuration, and the like related to the LCM signaling will be described.

As an example, measurement CSI-RS/SSB resource sets/groups associated with CSI compression, CSI prediction, beam prediction, positioning, and the like may be integrally changed according to the model group change related indication. Such an operation may reduce RS reconfiguration signaling according to a change in an operating environment (e.g., the measurement set is changed based on moving from cell/TRP A to cell/TRP B).

As an example, configuration values (e.g., prediction window, reporting granularity, etc.) associated with CSI compression, CSI prediction, beam prediction, positioning, and the like may be integrally changed according to the model group based LCM signaling. Such an operation may reduce report reconfiguration signaling according to the change in the operating environment.

In this case, information on which RS set/group and report configuration value to change/activate/deactivate for which group may be configured/defined in advance (e.g., configuration of the corresponding information through an RRC message, and defining the corresponding information when implementing the UE/NW (base station)).

Alternatively, a specific prescribed value (e.g. a value corresponding to a fallback operation) may be prescribed to be applied. For example, when the fallback operation is indicated via the LCM signaling, a specific parameter(s) of a report configuration related to CSI prediction and beam prediction may be defined to be set to a prescribed default value (e.g. a non-predicted CSI/beam report is performed by resetting a prediction window related value to a default value).

### Method 1-1

(When applying Method 1) The RS/channel/report related configuration may be reset to a preset or promised/prescribed value based on the LCM signaling.

Method 1-1 above may also be applied to a case where Method 1 is not applied, that is, single model/functionality based LCM.

The proposed methods (e.g., Method 1 and Method 1-1) may be extensively applied to not only the LCM signaling but also a model group based transfer/delivery approach in model transfer/delivery. For example, a model transfer/delivery for the model group may be performed according to the change in the operating environment/scenario.

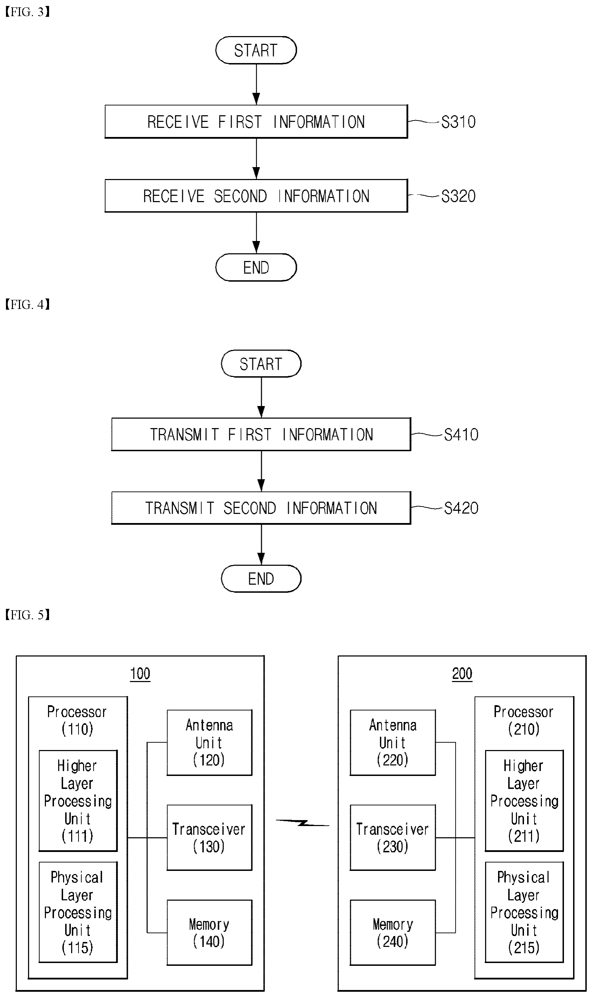

In terms of implementation, the operations (e.g., operations based on at least one of Method 1 and Method 1-1) of the base station/UE according to the above-described embodiments may be processed by devices in FIG. 5 to be described below (e.g., processors 110 and 210 in FIG. 5).

Further, the operations (e.g., operations based on at least one of Method 1 and Method 101) of the base station/UE according to the above-described embodiment may be stored in memories (e.g., 140 and 240 in FIG. 5) in the form of an instruction/program (e.g., instruction or executable code) for driving at least one processor (e.g., 110 and 210 in FIG. 5).

Hereinafter, a signaling procedure based on the above-described embodiments will be described.

FIG. 2 illustrates a signaling procedure according to an embodiment of the present disclosure.

FIG. 2 illustrates an example of a signaling between a user equipment (UE) and a network (NW) based on the above-described proposed method. Here, the UE/NW is just an example, and may be replaced and applied with various devices. FIG. 2 is just for convenience of the description and does not limit the scope of the present disclosure. Further, some step(s) illustrated in FIG. 2 may be omitted according to a situation and/or a configuration.

The base station belonging to the NW in FIG. 2 may correspond to any entity such as base station (BS), node B, TRP, etc., and the UE may also be replaced with an entity/server which is in charge of a UE-related AI/ML operation instead of the UE.

FIG. 2 illustrates a model/functionality switching (or selection) procedure, which is an embodiment of the proposed LCM signaling, and other procedures may be performed with respect to other LCM procedures (e.g., model/functionality selection/activation/deactivation/update/fallback/etc.). In addition to the procedure illustrated in FIG. 2, the model/functionality switching procedure may also be performed through another procedure.

The UE may perform a procedure S205 of reporting UE information for an AI/ML model and/or a feature/functionality related thereto to the base station. The information may include a UE capability value.

The base station may perform configurations for the related function/parameter and/or the AI/ML model based on the UE capability value reported in S205 (S210).

Then, the model/functionality switching procedure between the base station and the UE may be performed. A detailed process of the model/functionality switching procedure may be diversified, and FIG. 2 illustrates an embodiment of the corresponding procedure. In order for the NW to determine model switching, the UE may transmit monitoring information related to a model capability to the base station (S215). Alternatively, when the base station determines the model switching not based on the reporting information of the UE, such a procedure may be omitted.

The NW may perform an instruction for model/functionality switching for the UE (S220). In such a procedure the proposed method (e.g. Method 1 or Method 1-1) of the present disclosure may be applied. For example, a model group ID based or any zone/configuration ID based switching instruction may be made. In addition, an RS/channel/report related configuration may be changed based on such an instruction.

The UE receiving the instruction S220 may perform switching for a model/functionality and related operations, and transmit a related acknowledgement/confirmation message to the NW (S225).

As mentioned above, the above-described NW/UE signaling and operation may be implemented by devices (in FIG. 5) to be described below. For example, the NW may correspond to a first wireless device and the UE may correspond to a second wireless device and in some cases, an opposite case thereto may also be considered.

For example, the above-described NW/UE signaling and operation may be processed by one or more processors 110 and 210 of FIG. 5, and the above-described NW/UE signaling and operation may be stored in memories 140 and 240 in the form of an instruction/program (e.g. instruction, executable code) for driving at least one processor 110 or 210 in FIG. 5.

Hereinafter, the above-described embodiments will be described in detail with reference to FIGS. 3 and 4 in terms of the operations of the first device and the second device. Methods to be described below are just distinguished for convenience of description and it is needless to say that some components of any one method may be substituted with some components of another method or may be applied in combination with each other. Hereinafter, the first device and the second device may be entities that perform signaling related to model/functionality management (and/or model transfer/delivery). As an example, the first device may be a UE, a base station, or a first UE, and the second device may be a base station, a UE, or a second UE.

FIG. 3 is a flowchart for describing a method performed by a first device according to an embodiment of the present disclosure.

Referring to FIG. 3, the method performed by the first device according to an embodiment of the present disclosure a first information receiving step S310 and a second information receiving step S320.

In S310, the first device receives first information related to groups from a second device. As an example, the grouped may be configured based on the first information. As an example, a plurality of models/functionalities may be classified/determined as the groups.

According to an embodiment, each of the groups may be related to a common property. The embodiment may be based on Method 1.

As an example, the common property may be based on at least one of i) a zone, ii) a configuration, iii) data traffic, iv) mobility, and/or v) interference.

In S320, the first device receives second information related to management of a group from the second device.

According to an embodiment, the group may be related to i) one or more models and/or ii) one or more functionalities.

As an example, an operation related to the one or more models and/or the one or more functionalities may be indicated based on the second information. The embodiment may be based on Method 1.

As an example, the operation may include at least one of i) activation, ii) deactivation, iii) selection, iv) switching, v) update, and/or vi) fallback.

As an example, the operation may be indicated based on an ID or a unit related to the group.

According to an embodiment, at least one configuration related to the group may be reset based on the second information. The embodiment may be based on Method 1 or Method 1-1.

As an example, the at least one configuration may be related to at least one of CSI compression, CSI prediction, beam prediction, and/or positioning.

As an example, the at least one configuration may include at least one of i) a reference signal (RS) set related to a measurement, ii) a prediction window related to channel state information (CSI) and/or a beam, and/or iii) a granularity related to reporting of the CSI and/or the beam.

The operations based on S310 and S320 described above may be implemented by the devices in FIG. 5. For example, a first device 100/200 may control one or more transceivers 130/230 and/or one or more memories 140/240 to perform the operations based on S310 and S320.

Hereinafter, the embodiments described above will be specifically described in terms of the operation of the second device.

S410 and S440 described below correspond to S310 and S340 described in FIG. 3. By considering the correspondence relationship, redundant descriptions are omitted. That is, a specific description of an operation of the second device described below may be replaced with the description/embodiment of FIG. 3 corresponding to the operation.

FIG. 4 is a flowchart for describing a method performed by a second device according to another embodiment of the present disclosure.

Referring to FIG. 4, the method performed by the second device according to another embodiment of the present disclosure a first information transmitting step S410 and a second information transmitting step S420.

In S410, the second device transmits first information related to groups to the first device.

In S420, the second device receives second information related to management of a group to the first device.

The operations based on S410 and S420 described above may be implemented by the devices in FIG. 5. For example, a second device 100/200 may control one or more transceivers 130/230 and/or one or more memories 140/240 to perform the operations based on S410 and S420.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a first device in a wireless communication system, the method comprising:
receiving first information related to groups; and
receiving second information related to management of a group.

2. The method of claim 1, wherein the group is related to i) one or more models and/or ii) one or more functionalities.

3. The method of claim 2, wherein an operation related to the one or more models and/or the one or more functionalities is indicated based on the second information.

4. The method of claim 3, wherein the operation includes at least one of i) activation, ii) deactivation, iii) selection, iv) switching, v) update, and/or vi) fallback.

5. The method of claim 3, wherein the operation is indicated based on an ID or a unit related to the group.

6. The method of claim 1, wherein at least one configuration related to the group is reset based on the second information.

7. The method of claim 6, wherein the at least one configuration includes at least one of i) a reference signal (RS) set related to a measurement, ii) a prediction window related to channel state information (CSI) and/or a beam, and/or iii) a granularity related to reporting of the CSI and/or the beam.

8. The method of claim 1, wherein each of the groups is related to a common property.

9. The method of claim 8, wherein the common property is based on at least one of i) a zone, ii) a configuration, iii) data traffic, iv) mobility, and/or v) interference.

10. A first device operating in a wireless communication system, the first device comprising:
one or more transceivers;
one or more processors; and
one or more memories connected to the one or more processors and storing instructions,
wherein the instructions, based on being executed by the one or more processors, configure the one or more processors to perform all steps of a method of any one of claims 1 to 9.

11. A device comprising: one or more memories and one or more processors functionally connected to the one or more memories,
wherein the one or more memories store instructions that, based on being executed by the one or more processors, configure the one or more processors to perform all steps of a method of any one of claims 1 to 9.

12. One or more non-transitory computer-readable media storing instructions,
wherein the instructions executable by one or more processors configure the one or more processor to perform all steps of a method of any one of claims 1 to 9.

13. A method performed by a second device in a wireless communication system, the method comprising:
transmitting first information related to groups; and
transmitting second information related to management of a group.

14. A second device operating in a wireless communication system, the second device comprising:
one or more transceivers;
one or more processors; and
one or more memories connected to the one or more processors and storing instructions,
wherein the instructions, based on being executed by the one or more processors, configure the one or more processors to perform all steps of a method of claim 13.
